# EUROPÄISCHE PATENTSCHRIFT

(11) **EP 2 792 339 B1**
(45) Veröffentlichungstag und Bekanntmachung des Hinweises auf die Patenterteilung: **30.05.2018**
(21) Anmeldenummer: 14165129.9
(22) Anmeldetag: 17.04.2014
(51) Int. Cl.: A61G 5/02, A61G 5/10

(54) **Greifreifen für einen Rollstuhl**
Hand rim for a wheelchair
Main-courante pour fauteuil roulant

(30) Priorität: 19.04.2013 DE 202013101679 U
(43) Veröffentlichungstag der Anmeldung: 22.10.2014
(73) Patentinhaber: L & C Verwaltungsgesellschaft mbH, 01099 Dresden (DE)
(72) Erfinder: Filler, Mirko, 01277 Dresden (DE)
(74) Vertreter: Kailuweit & Uhlemann Patentanwälte Partnerschaft mbB

(56) Entgegenhaltungen:
- WO-A1-00/18346
- WO-A1-82/02026
- FR-A1- 2 526 311

## Beschreibung

Die Erfindung bezieht sich auf einen Greifreifen für einen Rollstuhl.

Greifreifen werden koaxial und drehfest an den Rädern von Rollstühlen befestigt und der Benutzer kann zum Drehen der Räder diese greifen. Im einfachsten Fall sind die Greifreifen aus Aluminium Strangpressprofilen gefertigt und mit der Felge des Rollstuhlrades verbunden.

In der Druckschrift DE 10 2009 038 816 A1 wird ein Greifreifen beschrieben, der aus mindestens einem ovalen Rohr und insbesondere aus mindestens zwei verbundenen Rohren besteht. So wird ein Querschnittsprofil des Greifreifens erreicht, dessen Höhe größer als seine Breite ist. Ein derartiger Greifreifen bietet eine verbesserte Greifbarkeit gegenüber herkömmlichen Rohrprofilen. Nachteilig ist der erhöhte Fertigungsaufwand für die Verbindung von mehreren Rohrprofilen.

In der WO 03/011202 A1 wird ein Greifreifen vorgeschlagen, der über ein Band vollumfänglich mit der Felge des Rollstuhlrades verbunden ist. Neben erhöhten Aufwendungen für die Fertigung ist weiterhin nachteilig immer nur die Greifreifen - Felgen - Einheit auswechselbar, was arbeits- und kostenaufwendig ist.

In der JP 2000225151 A wird ein Greifreifen bestehend aus einem Rohr mit ovalem Querschnitt beschrieben. Nachteilig ist die eingeschränkte Griffigkeit dieser Lösung.

In der WO 00/18346 A1 ist ein Greifreifen beschrieben, der auf der der Achse des Greifreifens zugewandten Seite einer radialen Unterteilung und auf einer Seite einer axialen Unterteilung bauchig und auf der jeweils entgegengesetzten Seite der radialen Unterteilung und der axialen Unterteilung abgeflacht ausgeführt ist. Dabei gehen die bauchigen und die abgeflachten Bereiche fließend ineinander bzw. in einen sich verjüngenden Bereich über. Dieser verjüngende Bereich dient der Befestigung des Greifreifens am Rollstuhlrad und ist einstückig mit den anderen Bereichen des Greifreifens ausgebildet. Daher ist der Greifreifen immer auf der dem Rollstuhlrad abgewandten Seite der axialen Unterteilung bauchig ausgeführt und in seiner Form und Montierbarkeit stark eingeschränkt.

Aus der WO 82/02026 A1 ist ein Greifreifen mit einem asymmetrischen Profilquerschnitt bekannt, bei dem die dem Rollstuhlrad abgewandte Seite der axialen Unterteilung und die der Achse des Greifreifens zugewandte Seite der radialen Unterteilung bauchig ausgeführt und die dem Rollstuhlrad zugewandte Seite der axialen Unterteilung abgeflacht sind, wobei bauchige und abgeflachte Bereiche fließend ineinander übergehen. Die der Achse des Greifreifens abgewandte Seite der radialen Unterteilung ist größtenteils bauchig ausgeführt,

Die Aufgabe wird gelöst durch einen Greifreifen gemäß Anspruch 1. Bevorzugte Ausführungsformen finden sich in den Unteransprüchen.

Der erfindungsgemäße Greifreifen für einen Rollstuhl hat einen asymmetrischen und in radialer und axialer Richtung unterteilten Profilquerschnitt. Axial und radial beziehen sich dabei auf das Rad des Rollstuhles an dem der Greifreifen koaxial befestigt wird. Unterteilter Profilquerschnitt bedeutet, dass eine der Seiten der axialen Unterteilung und die der Achse des Greifreifens zugewandten (innere) Seite der radialen Unterteilung bauchig ausgeführt und die andere Seite der axialen Unterteilung sowie die der Achse des Greifreifens abgewandte (äußere) Seite der radialen Unterteilung abgeflacht sind. Weiterhin gehen bauchige und abgeflachte Bereiche fließend ineinander über, wodurch vorteilhaft eine hervorragende Haptik und Ergonomie erzielt wird.

enthält jedoch auf der dem Rollstuhlrad zugewandten Seite ein gerades Teilstück. Die dem Rollstuhlrad abgewandte Seite der axialen Unterteilung des Greifreifens verjüngt sich ausgehend von der halbkreisförmigen, der Achse des Greifreifens zugewandte Seite der radialen Unterteilung aus hin zu der der Achse des Greifreifens abgewandte Seite der radialen Unterteilung.

Aufgabenstellung der vorliegenden Erfindung ist es, einen Greifreifen vorzustellen, der hervorragende ergonomische Eigenschaften hat, flexibel einsetzbar, kostengünstig in der Herstellung und sehr robust ist.

Die Aufgabe wird gelöst durch einen Greifreifen gemäß Anspruch 1. Bevorzugte Ausführungsformen finden sich in den Unteransprüchen.

Der erfindungsgemäße Greifreifen für einen Rollstuhl hat einen asymmetrischen und in radialer und axialer Richtung unterteilten Profilquerschnitt. Axial und radial beziehen sich dabei auf das Rad des Rollstuhles an dem der Greifreifen koaxial befestigt wird. Unterteilter Profilquerschnitt bedeutet, dass eine der Seiten der axialen Unterteilung und die der Achse des Greifreifens zugewandten (innere) Seite der radialen Unterteilung bauchig ausgeführt und die andere Seite der axialen Unterteilung sowie die der Achse des Greifreifens abgewandte (äußere) Seite der radialen Unterteilung abgeflacht sind. Weiterhin gehen bauchige und abgeflachte Bereiche fließend ineinander über, wodurch vorteilhaft eine hervorragende Haptik und Ergonomie erzielt wird.

Bauchig bedeutet im Sinne dieser Anmeldung, dass mindestens 60 %, bevorzugt 75 % und besonders bevorzugt 90 % der Außenkontur der jeweiligen Seite einen Radius zwischen 2,5mm und 20 mm aufweisen.

Abgeflacht bedeutet im Sinne dieser Anmeldung, dass der Radius mindestens 20 mm beträgt.

Die Unterteilung erfolgt dabei in axialer bzw. radialer Richtung weitestgehend mittig bezogen auf die jeweilige Gesamtausdehnung.

Besonders bevorzugt hat die Außenkontur der einen Hälfte der äußeren Seite der radialen Unterteilung (also eines Quadranten des Querschnittsprofils) zwei abgeflachte Bereiche, die sich in einem Winkel von 80 ° bis 100 ° in einer Greifkante treffen und dieser Treffbereich der abgeflachten Bereiche mit einem Radius von 2mm bis 15mm abgerundet ist. Vorteilhaft ist der Greifreifen durch die Greifkante besonders gut an die Ergonomie der Hand angepasst.

Die innere (der Achse des Greifreifens zugewandte) Seite der radialen Unterteilung ist weiterhin bevorzugt weitestgehend symmetrisch bezogen auf die axiale Unterteilung. Der Radius dieses Bereichs ist im Scheitelpunkt am geringsten und liegt dort bevorzugt zwischen 2,5mm und 12,5mm und nimmt in Richtung der (in Axialrichtung) äußeren Bereiche ab.

Vorteilhaft wird so ein Profil geschaffen, dass der Ergonomie der Hand bei der Betätigung der Greifreifen sehr gut angepasst ist. Die äußere Seite der radialen Unterteilung bietet mit der Abflachung eine gute Auflage für den Daumen des Benutzers.

Besonders vorteilhaft ist, dass der Greifreifen beidseitig, also mit der bauchigen Seite oder der abgeflachten Seite zum Rollstuhlrad gerichtet auf diesem montierbar ist. So wurde in Versuchen überraschenderweise festgestellt, dass ungefähr der gleiche Prozentsatz von Rollstuhlfahrern die bauchige Seite der axialen Unterteilung zum Rollstuhlrad gerichtet bevorzugt wie wenn diese Seite nach Außen gerichtet ist. Besonders vorteilhaft gelingt es somit mit einem Modell eines Greifreifens den Ansprüchen eines großen Anteils von Rollstuhlfahrern zu entsprechen.

Weiterhin bevorzugt ist der Greifreifen als Hohlprofil ausgebildet. Dies ist vorteilhaft kostengünstig und senkt das Gewicht. Besonders bevorzugt ist das Material faserverstärkter Kunststoff (FKV) oder Aluminium. Die Herstellung aus Aluminium erfolgt bevorzugt über das Strangpressverfahren in Kombination mit einem Profilbiegeprozess. Bei der Herstellung aus FKV kommt bevorzugt das Infusionsverfahren zum Einsatz. Dabei werden zunächst trockene Gelege- oder Flechtschläuche auf einen Kern drapiert. Nach Infusion und Aushärtung des Matrixwerkstoffes in einem Formwerkzeug verbleibt der Kern im Bauteil (verlorener Kern) oder wird nachträglich entfernt (lösbarer oder schmelzbarer Kern). Alternativ zum Infusionsverfahren erfolgt die Verwendung von Hybridschläuchen mit bereits integriertem Matrixmaterial auf Thermoplastbasis. Die vollständige Benetzung der Verstärkungsfasern erfolgt hier durch Aufschmelzen des Matrixmaterials im Formwerkzeug.

Weiterhin bevorzugt hat das Hohlprofil in den, im verbauten Zustand nach außen gerichteten Bereichen eine größere Wandstärke. So kann vorteilhaft die Stabilität erheblich gesteigert werden ohne das Gewicht negativ zu beeinflussen.

Zur weiteren Verstärkung der Greifreifen kann die Profilinnenseite des Greifreifens Verstärkungsrippen in Umfangsrichtung aufweisen. Diese Verstärkungsrippen können dabei auch nur bereichsweise, insbesondere in dem Bereich angeordnet sein, der nach außen gerichtet ist. Vorteilhaft kann so bei moderatem Gewichtsanstieg die Stabilität und Widerstandsfähigkeit gegen Stöße verbessert werden.

Weiterhin weisen die Greifreifen Mittel zur Befestigung am Rad eines Rollstuhles auf. Bevorzugt sind dies axial orientierte Laschen, die stoffschlüssig (bei Verwendung metallischer Greifreifen durch Schweißen) mit dem Greifreifen verbunden sind. Die Laschen besitzen am radseitigen Ende Bohrungen, die ein radiales Verschrauben der Reifen mit der Rollstuhlfelge ermöglichen.

Nachfolgend wir die geometrische Ausgestaltung des Greifreifens detaillierter beschrieben:
Die der Achse des Greifreifens zugewandte Seite der radialen Unterteilung ist ein Ellipsensegment. Die gegenüberliegende, der Achse des Greifreifens abgewandte Seite weist ein Geradstück auf. Das Geradstück und das Ellipsensegment sind durch ein erstes Verbindungskreissegment mit einem Radius h und ein zweites Verbindungskreissegment mit einem Radius i verbunden. Der Umfang des Querschnittsprofils wird somit gebildet von dem Ellipsensegment, ein sich daran anschließendes Verbindungskreissegment, ein sich daran anschließendes Geradstück und einem weiteren Verbindungskreissegment.

Der geringere Radius der beiden Verbindungskreissegmente h hat einen Wert zwischen 2mm ≤ h ≤ 15mm und der Radius des anderen Verbindungskreissegmentes i einen Wert von 10mm ≤ i ≤ 20mm. Das Verbindungskreissegment mit dem geringeren Radius h entspricht der oben beschriebenen Greifkante.

Besonders bevorzugt ist das Ellipsensegment ein Segment einer Ellipse mit den Hauptachsen a und b. Die längere Hauptachse a schließt mit dem Radius des Greifreifens und die kürzere Hauptachse b mit der Achsrichtung des Greifreifens einen Winkel d zwischen -25° ≤ d ≤ +25° ein.

Weiterhin bevorzugt hat die Hauptachse a eine Länge von 20mm ≤ a ≤ 100mm, besonders bevorzugt 20mm ≤ a ≤ 60mm, und die Hauptachse b eine Länge von 15mm ≤ b ≤ 50mm, besonders bevorzugt 15mm ≤ b ≤ 30mm. Unter der Länge der Hauptachsen wird hier der durch den Mittelpunkt der Ellipse führende Durchmesser entlang der jeweiligen Hauptachse verstanden. Der Mittelpunkt der Ellipse liegt auf der axialen Teilungslinie mit einem Abstand j vom Geradstück in Richtung des Mittelpunkts des Greifreifens. Der Abstand j beträgt vorzugsweise 0 ≤ j ≤ 10 mm.

Gleichfalls bevorzugt beträgt der kleinste Durchmesser c des Ellipsensegments 5mm ≤ c ≤ 25mm. Dieser kleinste Radius c liegt bevorzugt im inneren Schnittbereich von Profilquerschnitt und radialer Unterteilungslinie.

Das Geradstück ist bevorzugt um einen Winkel g von -15° ≤ g ≤ +15° gegenüber der radialen Unterteilung geneigt. Weiterhin bevorzugt hat es eine gerade oder leicht konvex (bezogen auf das Querschnittsprofil) gekrümmte Kontur mit einem Krümmungsradius f von mindestens 30mm. Die Länge e des Geradstücks e liegt zwischen 0mm und 20mm, wobei die Länge größer 0mm ist und bevorzugt zwischen 5mm und 20mm liegt.

Besonders bevorzugt liegt der Radius h des ersten Verbindungkreissegments zwischen 2mm ≤ h ≤ 15mm und der Radius i des zweiten Verbindungkreissegments zwischen 10mm ≤ i ≤ 20mm.

Vorzugsweise ist das Querschnittsprofil des Greifreifens vollständig konvex. In einer anderen bevorzugten Ausführungsform weist der Greifreifen auf der zum Rollstuhlrad und zur Achse des Greifreifens gerichteten Seite ein Muldensegment mit einer konkaven Kontur auf, wobei das Muldensegment vorzugsweise einen Krümmungsradius m von 30 mm ≤ m ≤ 80 mm hat. Der Mittelpunkt eines das Muldensegment beschreibenden Kreises ist dabei gegenüber dem Mittelpunkt eines das Geradstück beschreibenden Kreises in eine Richtung parallel zur axialen Unterteilungslinie in Richtung des Geradstücks verschoben. Dieser Abstand n beträgt vorzugsweise 5 mm ≤ n ≤ 30 mm.

Der Übergang zwischen dem Muldensegment und den benachbarten Bereichen des Greifreifens wird durch ein drittes Verbindungskreissegment und ein viertes Verbindungskreissegment beschrieben. Das dritte Verbindungskreissegment weist vorzugsweise einen Radius k zwischen 5 mm ≤ k ≤ 30 mm auf, während das vierte Verbindungskreissegment vorzugsweise einen Radius I zwischen 5 mm ≤ I ≤ 30 mm hat.

Für den Fall, dass die Radien k, l und m gleich Null sind, weist der Greifreifen kein Muldensegment auf, sondern hat ein vollständig konvexes Querschnittsprofil.

Das Muldensegment des Greifreifens dient als Griffmulde für die Finger des Rollstuhlfahrers, wenn dieser den Greifreifen umfasst, und gewährleistet einen sicheren und angenehmen Halt der Finger am Greifreifen. Damit wird die Ergonomie sowie Haptik des Greifreifens weiter verbessert. Insbesondere wird durch die Anpassung der Profilform an die Handergonomie eine gleichmäßigere Druckverteilung zwischen Hand und Greifreifen erreicht. Damit werden einzelne Druckpunkte vermieden, was schmerzlindernd wirkt und das Karpaltunnelsyndrom lindert oder vermeidet.

Das Verfahren zur Bestimmung des Wertes von mindestens einem Parameter des Querschnittsprofils des Greifreifens weist einen Schritt zum Bestimmen des Wertes von mindestens einem Parameter der Hand eines Rollstuhlfahrers und einen Schritt zum Bestimmen des Wertes von mindestens einem Parameter des Querschnittsprofils des Greifreifens aus dem ermittelten Wert des mindestens einen Parameters der Hand des Rollstuhlfahrers auf. Dieses Verfahren erlaubt eine besonders gute Anpassung des Greifreifens an den jeweiligen Rollstuhlfahrer und damit eine weiter verbesserte Ergonomie und Haptik des Greifreifens für den jeweiligen Rollstuhlfahrer.

Dabei ist der Parameter der Hand des Rollstuhlfahrers vorzugsweise mindestens einer aus der Gruppe umfassend die Handlänge, den Handumfang, die Fingerlänge, die Fingerbreite, der Abstand zwischen Zeigefinger und Daumenballen und die Spannweite zwischen Daumen und Zeigefinger des Rollstuhlfahrers. Der mindestens eine Parameter der Hand des Rollstuhlfahrers wird vorzugsweise mittels eines Maßbandes, durch optische Vermessung oder durch Vermessung mittels thermischer oder Drucksensoren bestimmt. In besonders vorteilhafter Weise werden die Größen aller genannten Parameter ermittelt.

Mit Hilfe des ermittelten Wertes des mindestens einen Parameters der Hand des Rollstuhlfahrers lässt sich der Wert von mindestens einem Parameter des Querschnittsprofils des Greifreifens bestimmen, der in der Gruppe umfassend die Länge a der langen Hauptachse der Ellipse, die Länge b der kurzen Hauptachse der Ellipse, den Durchmesser c des Krümmungskreises im Scheitelpunkt der Ellipse, die Neigung d der Hauptachse a gegenüber dem Radius des Greifreifens, die Länge e des Geradstücks des Greifreifens, den Radius f des Geradstücks, die Neigung g des Geradstücks gegenüber der radialen Unterteilungslinie, den Radius h des ersten Verbindungskreissegments, den Radius i des zweiten Verbindungskreissegments, den Abstand j des Mittelpunktes der Ellipse vom Geradstück, den Radius k des dritten Verbindungskreissegmentes, den Radius l des vierten Verbindungskreissegmentes, den Radius m des Muldensegmentes und den Abstand n des Mittelpunktes des das Muldensegment beschreibenden Kreises vom Mittelpunkt des das Geradstück beschreibenden Kreises in einer Richtung parallel zur axialen Unterteilungslinie enthalten ist.

Vorzugsweise wird der Wert des mindestens einen Parameters des Querschnittsprofils anhand einer Tabelle oder einer oder mehrerer Kennlinien ermittelt. Diese Tabelle bzw. die Kennlinien basieren auf von den Erfindern durchgeführten Versuchsreihen. Dabei umfassten Testpersonen einen plastisch verformbaren Körper ähnlich einem Greifreifen und verformten diesen entsprechend ihrer Handform. Anhand dieser Körper wurde für jede Testperson ein entsprechendes Querschnittsprofil des Greifreifens erstellt. Bei einer anschließenden Simulation der Querschnittsprofile wurden die oben beschriebenen Parameter a bis n als zur geometrischen Beschreibung der Profile ausreichend erkannt. Dabei ergab sich eine Korrelation zwischen den Werten der Parameter der Hand einer Testperson und der für diese Testperson geeigneten Werte der Parameter des Querschnittsprofils des Greifreifens. Die Bestimmung des Wertes des mindestens einen Parameters des Querschnittsprofils wird vorzugsweise durch einen Rechner bzw. auf einem Computer installierten Software ausgeführt.

Der derart bestimmte Werte des Parameters des Querschnittsprofils wird anschließend an eine Software übergeben, die anhand des übermittelten Wertes und von Durchschnittswerten der anderen Parameter des Querschnittsprofils, für die keine Werte übermittelt wurden, ein Querschnittsprofil des Greifreifens erstellt und für die Herstellung des Greifreifens zur Verfügung stellt.

Bevorzugt weist der Greifreifen eine Beschichtung auf, insbesondere eine Pulverbeschichtung, eine Gummierung oder ist eloxiert. Vorteilhaft wird so eine bessere Haptik und eine thermische Isolation erreicht, wodurch das Kältegefühl beim Anfassen für den Benutzer reduziert wird. Zudem kann durch eine Beschichtung die Optik des Greifreifens individualisiert werden.

Nachfolgend werden mehrere Ausführungsbeispiele der Erfindung anhand von Figuren erläutert. Es zeigen:
- Figur 1: das Querschnittsprofil eines erfindungsgemäßen Greifreifens mit einem vollständig konvexen Profilverlauf,
- Figur 2: das Querschnittsprofil eines erfindungsgemäßen Greifreifens mit Bezeichnung der Segmente,
- Figur 3: das Querschnittsprofil mit eingezeichneter Ellipse,
- Figur 4: das Querschnittsprofil mit eingezeichnetem Geradstück,
- Figur 5: das Querschnittsprofil mit Verdeutlichung der Radien der Verbindungskreissegmente,
- Figur 6: das Querschnittsprofil eines erfindungsgemäßen Greifreifens mit variierender Wandstärke,
- Figur 7: das Querschnittsprofil eines Greifreifens mit Verstärkungsrippen,
- Figur 8: verschiedene Ausführungsbeispiele des Querschnittsprofils,
- Figur 9: das Querschnittsprofil einer Ausführungsform des erfindungsgemäßen Greifreifens mit einem Muldensegment,
- Fig. 10A: die Kennlinie für die Abhängigkeit der Profilhöhe vom Abstand des Zeigefingers zum Daumenballen, und
- Fig. 10B: die Kennlinie für die Abhängigkeit der Profilbreite von der Daumenbreite.

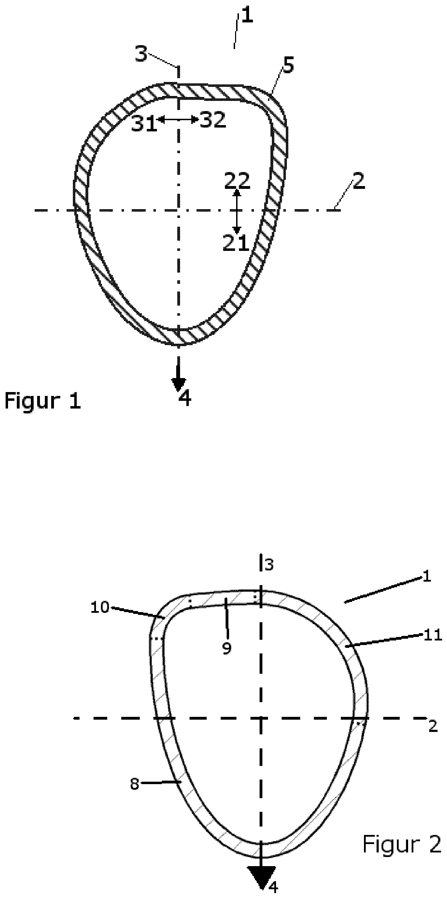

Figur 1 zeigt das Querschnittsprofil 1 eines erfindungsgemäßen Greifreifens für einen Rollstuhl, wobei die gezeigte Ausführungsform eine vollständig konvexe Kontur aufweist. Im Profil sind eine radiale Teilungslinie 2 und eine axiale Teilungslinie 3 eingezeichnet. Die axiale Teilungslinie 3 liegt in Einbauposition parallel zur Ebene des Rades, auf dem der Greifreifen montiert ist, also in weitestgehend vertikaler Richtung. Die radiale Trennungslinie 2 liegt entsprechend weitestgehend in horizontaler Richtung. Durch einen Pfeil 4 an der axialen Trennungslinie 3 ist die Richtung zum Mittelpunkt 4 des Greifreifens angegeben.

Die axiale Teilungslinie 3 unterteilt das Querschnittsprofil 1 in eine bauchige Seite 31 und eine abgeflachte Seite 32. Analog unterteilt die radiale Teilungslinie 2 das Querschnittsprofil 1 in eine bauchige Seite 21, die die innere, dem Greifreifenmittelpunkt zugewandte Seite darstellt und eine abgeflachte Seite 22, die auch als äußere bzw. dem Mittelpunkt abgewandte Seite bezeichnet wird.

In dem Quadranten des Querschnittsprofils 1, der sowohl auf der abgeflachten Seite 32 der axialen Teilungslinie 3 als auch auf der abgeflachten Seite 22 der radialen Teilungslinie 2 liegt, treffen sich zwei weitestgehend gerade Bereiche in einem Winkel von 85° zu einer Greifkante 5. Diese Greifkante 5 ist mit einem Radius von 4 mm abgerundet.

Der Greifreifen in Figur 1 ist ein Aluminium-Strangpressprofil mit einer Wandstärke von 2mm.

Das Querschnittsprofil 1 hat (im Bereich der axialen Teilungslinie 3) eine radiale Ausdehnung von 24 mm und eine axiale Ausdehnung (im Bereich der radialen Teilungslinie 2) von 20 mm.

Figur 2 verdeutlicht die einzelnen Segmente des Querschnittsprofils 1. Ein Ellipsensegment 8 ist auf der der Achse des Greifreifens zugewandte Seite des Querschnittprofils 1 angeordnet. Dem Ellipsensegment 8 liegt ein Geradstück 9 gegenüber. Ein erstes Verbindungskreissegment 10 und ein zweites Verbindungskreissegment 11 verbinden Ellipsensegment 8 und Geradstück 9.

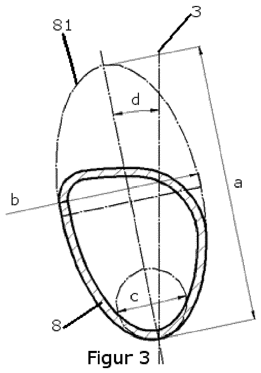

Figur 3 veranschaulicht die Parameter zur Beschreibung des Ellipsensegmentes 8. Das Ellipsensegment 8 ist ein Ausschnitt aus einer Ellipse 81. Diese wird durch die Parameter a, b, c, d beschrieben, wobei a die Gesamtausdehnung der längeren Ellipsenachse bezeichnet, b die Gesamtausdehnung der kürzeren Ellipsenachse, c das Doppelte (den Durchmesser) des geringsten Radius der Ellipse 81, der weitestgehend mittig auf der der Achse des Greifreifens zugewandten (inneren) Seite liegt.

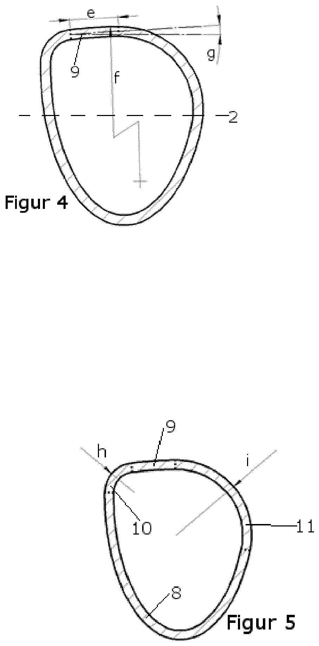

Figur 4 veranschaulicht den Parameter e, der die Länge des Geradstücks 9 bezeichnet. Das Geradstück ist ferner gegenüber der radialen Unterteilung 2 um den Winkel g geneigt. Das Geradstück muss ferner nicht vollständig gerade sein, sondern kann auch einen Radius f aufweisen.

Figur 5 verdeutlicht die Radien h und i des ersten bzw. zweiten Verbindungskreissegments 10, 11.

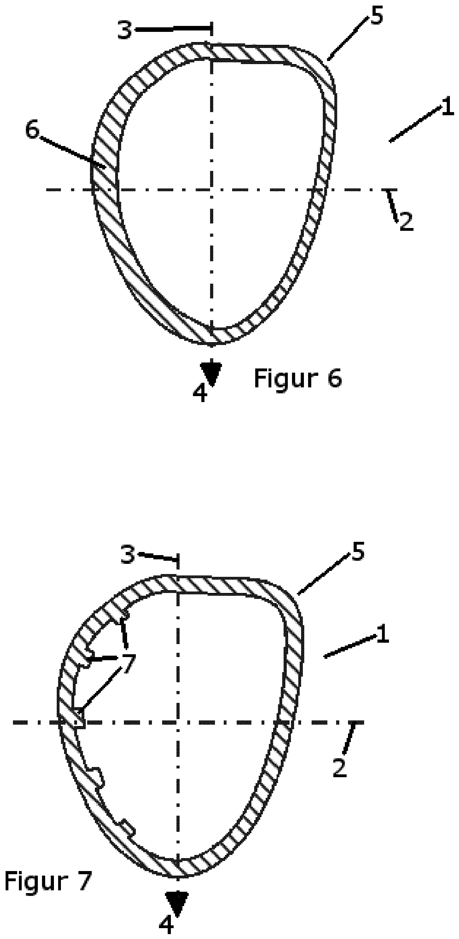

Figur 6 zeigt das Querschnittsprofil 1 eines Greifreifens, der im Bereich der bauchigen Seite 31 der axialen Teilungslinie 3 eine größere Wandstärke von 3 mm aufweist. Die Wandstärke auf der abgeflachten Seite 32 der axialen Teilungslinie 3 beträgt 1 mm.

Figur 7 zeigt analog zu Figur 2 ein Querschnittsprofil 1, dass im Bereich der bauchigen Seite 31 der axialen Teilungslinie 3 verstärkt ist, indem im Querschnittsprofil 1 innen Verstärkungsrippen 7 aufgebracht sind.

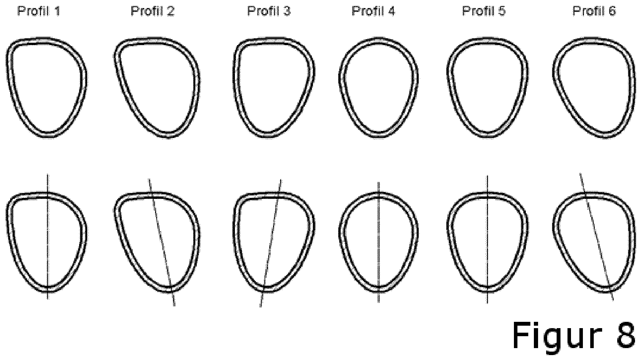

Figur 8 zeigt verschiedene bevorzugte Querschnittsprofile mit eingezeichneter Neigung der langen Ellipsenachse a, wobei das Profil 4 keine Ausführungsform des erfindungsgemäßen Greifreifens ist. Folgende Werte haben die Parameter der gezeigten Profile (Tabelle 1):

**Tabelle 1**

| **Maß** | **Einheit** | **Profil 1** | **Profil 2** | **Profil 3** | **Profil 4** | **Profil 5** | **Profil 6** |
|---|---|---|---|---|---|---|---|
| a | mm | 40 | 40 | 40 | 40 | 40 | 40 |
| b | mm | 20 | 20 | 20 | 20 | 20 | 20 |
| c | mm | 10 | 10 | 10 | 10 | 10 | 10 |
| d | ° | 0 | 12 | -12 | 0 | 0 | 12 |
| e | mm | 6 | 7 | 8 | 0 | 5 | 6 |
| f | mm | 55 | 55 | 55 | - | 25 | 25 |
| g | ° | 4 | 4 | 4 | - | 0 | -4 |
| h | mm | 4 | 4 | 4 | 10 | 8 | 8 |
| i | mm | 10 | 10 | 8 | 10 | 8 | 8 |

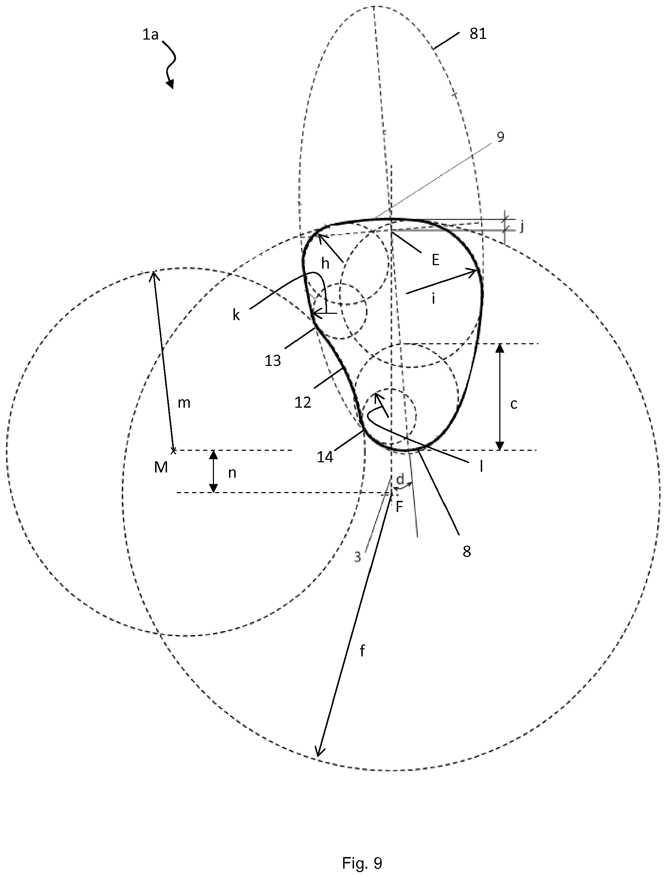

Figur 9 zeigt das Querschnittsprofil 1a eines Greifreifens, der in dem Quadranten, der sowohl auf der abgeflachten Seite 32 der axialen Teilungslinie 3 als auch auf der bauchigen Seite 21 der radialen Teilungslinie 2 liegt, ein Muldensegment 12 mit einer konkaven Kontur aufweist. Das Muldensegment 12 weist einen Krümmungsradius m auf. Der Mittelpunkt M eines das Muldensegment 12 beschreibenden Kreises mit dem Radius m ist gegenüber dem Mittelpunkt F eines das Geradstück 9 beschreibenden Kreises mit dem Radius f um einen Abstand n in eine Richtung parallel zur axialen Unterteilungslinie 3 in Richtung des Geradstücks 9 verschoben. Der Übergang zwischen dem Muldensegment 12 und den benachbarten Bereichen des Greifreifens wird durch ein drittes Verbindungskreissegment 13 mit dem Radius k und ein viertes Verbindungskreissegment 14 mit dem Radius l beschrieben.

Das Muldensegment 12 ist in jedem Fall in der dem Rollstuhlrad zugewandten Seite des Greifreifens ausgebildet. Daher ist in dem in Figur 9 dargestellten Ausführungsbeispiel der Greifreifen mit der abgeflachten Seite 32 der axialen Teilungslinie 3 zum Rollstuhlrad gerichtet auf diesem zu montieren. In einem anderen Ausführungsbeispiel ist das Muldensegment 12 in dem Quadranten, der sowohl auf der bauchigen Seite 31 der axialen Teilungslinie 3 als auch auf der bauchigen Seite 21 der radialen Teilungslinie 2 liegt, ausgebildet, so dass der Greifreifen mit der bauchigen Seite 31 der axialen Teilungslinie 3 zum Rollstuhlrad gerichtet auf diesem zu montieren ist.

In Figur 9 ist des Weiteren der Abstand j zwischen dem Mittelpunkt E der Ellipse 81 und dem Geradstück 9 dargestellt. Der Mittelpunkt E liegt auf der axialen Teilungslinie 3, die der Verbindungslinie zwischen der Kreislinie und dem Mittelpunkt F des Kreises mit dem Radius f entspricht (wobei die Neigung g des Geradstücks 9 gegenüber der axialen Unterteilungslinie 2 vernachlässigt ist).

Das Querschnittsprofil 1a des Greifreifens kann demnach durch folgende geometrische Figuren beschrieben werden:
- einen Kreis mit dem Radius f und dem Mittelpunkt F, wobei die Verbindungslinie zwischen der Kreislinie und dem Mittelpunkt F die axiale Teilungslinie 3 darstellt;
- eine Ellipse 81 mit einer langen Hauptachse mit der Länge a und einer kurzen Hauptachse mit der Länge b, einem Mittelpunkt E, einem Abstand j des Mittelpunktes E zur Kreislinie des Kreises mit dem Radius f, wobei die lange Hauptachse gegenüber der axialen Teilungslinie 3 um den Winkel d geneigt ist;
- einen Kreis mit dem Durchmesser c und zwei tangentialen Berührungspunkten zur Ellipse 81 in einem dem Mittelpunkt F zugewandten Teil der Ellipse 81, so dass der Durchmesser c in etwa dem Doppelten des geringsten Radiuses der Ellipse 81 entspricht;
- einem Geradstück 9 mit der Länge e, das auf der Kreislinie des Kreises mit dem Radius f angeordnet ist, wobei das Geradstück 9 gegenüber der radialen Teilungslinie 2 um den Winkel g geneigt ist;
- einen Kreis mit dem Radius h, einem tangentialen Berührungspunkt zum Kreis mit dem Radius f und einem tangentialen Berührungspunkt zur Ellipse 81;
- einen Kreis mit dem Radius i, einem tangentialen Berührungspunkt zum Kreis mit dem Radius f und einem tangentialen Berührungspunkt zur Ellipse 81;
- einem Kreis mit dem Radius m und einem Mittelpunkt M, der einen Abstand n zum Mittelpunkt F des Kreises mit dem Radius f in einer Richtung parallel zur axialen Unterteilungslinie 3 in Richtung des Geradstücks 9 aufweist;
- einen Kreis mit dem Radius k, einem tangentialen Berührungspunkt zum Kreis mit dem Radius m und einem tangentialen Berührungspunkt zur Ellipse 81; sowie
- einen Kreis mit dem Radius l, einem tangentialen Berührungspunkt zum Kreis mit dem Radius m und einem tangentialen Berührungspunkt zum Kreis mit dem Durchmesser c.

Das Querschnittsprofil ergibt sich somit aus dem Geradstück 9, den zwischen den tangentialen Berührungspunkten der Kreise mit dem Durchmesser c bzw. den Radien h, i, k und l liegenden jeweiligen Kreissegmenten dieser Kreise, die dem Ellipsensegment 8 sowie den ersten bis vierten Verbindungskreissegmenten 10, 11, 13, 14 entsprechen, dem innerhalb der Ellipse 81 liegenden Kreissegment des Kreises mit dem Radius m sowie dem zwischen diesen Segmenten verlaufenden Teilsegmenten der Ellipse 81.

Für das in Figur 9 dargestellte Ausführungsbeispiel gelten folgende Werte für die einzelnen Parameter bzw. Maße (Tabelle 2):

**Tabelle 2**

| Maß | a | b | c | d | e | f | g | h | i | j | k | l | m | n |
|---|---|---|---|---|---|---|---|---|---|---|---|---|---|---|
| Wert | 54 | 24 | 8 | 12 | 11,3 | 50 | 4 | 20 | 10 | 5 | 5 | 5 | 25 | 28 |
| Einheit | mm | mm | mm | ° | mm | mm | ° | mm | mm | mm | mm | mm | mm | mm |

Ein oder mehrere oder alle Werte der Parameter des Profils können mit Hilfe von ermittelten Werten von Parametern der Hand eines Rollstuhlfahrers bestimmt werden, wodurch das Profil des Greifreifens individuell an den jeweiligen Rollstuhlfahrer angepasst oder zumindest ein Greifreifen mit einem geeigneten Profil aus einer Mehrzahl von verfügbaren Greifreifen ausgewählt werden kann. Dabei kann der Wert eines spezifischen Profilparameters beispielsweise aus einer Kennlinie entsprechend eines ermittelten Wertes eines spezifischen Handparameters entnommen werden.

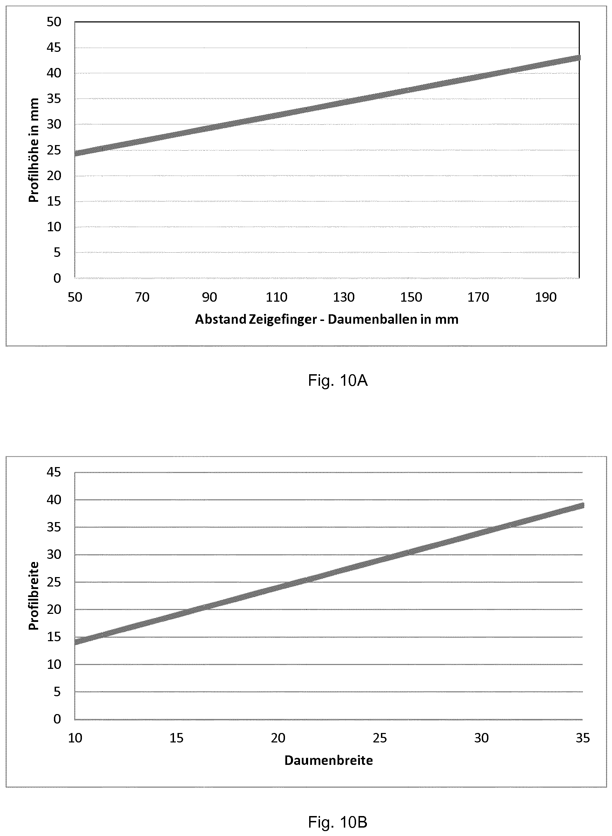

Die Figuren 10A und 10B zeigen beispielhaft derartige Kennlinien. In Figur 10A ist die Kennlinie für die Abhängigkeit der Profilhöhe vom Abstand des Zeigefingers zum Daumenballen dargestellt, während Figur 10B die Kennlinie für die Abhängigkeit der Profilbreite von der Daumenbreite zeigt. Die Profilhöhe beschreibt dabei die Summe aus der Hälfte der Länge a der langen Hauptachse der Ellipse (81) und des Abstandes j des Mittelpunktes (E) der Ellipse (81) vom Geradstück (9), während die Profilbreite der Länge b der kurzen Hauptachse der Ellipse (81) entspricht.

### Bezugszeichenliste:

- 1, 1a: Querschnittsprofil
- 2: radiale Teilungslinie
- 21: bauchige Seite der radialen Teilungslinie
- 22: abgeflachte Seite der radialen Teilungslinie
- 3: axiale Teilungslinie
- 31: bauchige Seite der axialen Teilungslinie
- 32: abgeflachte Seite der axialen Teilungslinie
- 4: Richtung zum Mittelpunkt des Greifreifens
- 5: Greifkante
- 6: verstärkter Bereich
- 7: Verstärkungsgrippen
- 8: Ellipsensegment
- 81: Ellipse
- 9: Geradstück
- 10: erstes Verbindungskreissegment
- 11: zweites Verbindungskreissegment
- 12: Muldensegment des Greifreifens
- 13: drittes Verbindungskreissegment
- 14: viertes Verbindungskreissegment
- a: Länge der langen Hauptachse der Ellipse
- b: Länge der kurzen Hauptachse der Ellipse
- c: Kreisdurchmesser
- d: Neigung der Hauptachse a gegenüber dem Radius des Greifreifens
- e: Länge Geradstück
- f: Radius Geradstück
- g: Neigung Geradstück gegenüber der radialen Unterteilungslinie
- h: Radius erstes Verbindungskreissegment
- i: Radius zweites Verbindungskreissegment
- j: Abstand des Mittelpunktes der Ellipse vom Geradstück
- k: Radius des dritten Verbindungskreissegmentes
- l: Radius des vierten Verbindungskreissegmentes
- m: Radius des Muldensegmentes
- n: Abstand des Mittelpunktes des das Muldensegment beschreibenden Kreises vom Mittelpunkt des das Geradstück beschreibenden Kreises in einer Richtung parallel zur axialen Unterteilungslinie
- E: Mittelpunkt der Ellipse
- F: Mittelpunkt des Kreises mit dem Radius f
- M: Mittelpunkt des Kreises mit dem Radius m

## Patentansprüche

1. Greifreifen für einen Rollstuhl mit einem asymmetrischen, in radialer und axialer Richtung unterteilten Profilquerschnitt, wobei eine der Seiten der axialen Unterteilung und die der Achse des Greifreifens zugewandte Seite der radialen Unterteilung bauchig ausgeführt und die andere Seite der axialen Unterteilung sowie die der Achse des Greifreifens abgewandte Seite der radialen Unterteilung abgeflacht sind, wobei bauchige und abgeflachte Bereiche fließend ineinander übergehen,
**dadurch gekennzeichnet, dass** die der Achse des Greifreifens zugewandte Seite der radialen Unterteilung ein Ellipsensegment (8) ist und die der Achse des Greifreifens abgewandte Seite der radialen Unterteilung ein Geradstück (9) aufweist, wobei das Geradstück (9) und das Ellipsensegment (8) durch ein erstes Verbindungskreissegment (10) mit einem Radius h und ein zweites Verbindungskreissegment (11) mit einem Radius i verbunden sind, wobei der Umfang des Querschnittsprofils von dem Ellipsensegment (8), dem sich daran anschließenden ersten Verbindungskreissegment (10), dem sich daran anschließenden Geradstück (9) und dem zweiten Verbindungskreissegment (11) gebildet wird.

2. Greifreifen nach Anspruch 1, **dadurch gekennzeichnet, dass** der Greifreifen aus einem Hohlprofil ausgebildet ist.

3. Greifreifen nach Anspruch 1 oder 2, **dadurch gekennzeichnet, dass** der Radius h einen Wert von 2mm ≤ h ≤ 15mm und der Radius i einen Wert von 10mm ≤ i ≤ 20mm hat.

4. Greifreifen nach einem der Ansprüche 1 bis 3, **dadurch gekennzeichnet, dass** das Ellipsensegment (8) ein Segment einer Ellipse mit den Hauptachsen a und b ist, wobei die längere Hauptachse a mit dem Radius des Greifreifens und die kürzere Hauptachse b mit der Achsrichtung des Greifreifens einen Winkel d mit -25° ≤ d ≤ +25° einschließen.

5. Greifreifen nach Anspruch 4, **dadurch gekennzeichnet, dass** die Hauptachse a eine Länge von 20mm ≤ a ≤ 100mm und die Hauptachse b eine Länge von 15mm ≤ b ≤ 50mm hat.

6. Greifreifen nach Anspruch 5, **dadurch gekennzeichnet, dass** der kleinste Durchmesser c des Ellipsensegments (8) einen Wert von 5mm ≤ c ≤ 25mm annimmt.

7. Greifreifen nach einem der Ansprüche 1 bis 6, **dadurch gekennzeichnet, dass** das Geradstück (9) um einen Winkel g mit -15° ≤ g ≤ +15° gegenüber der radialen Unterteilung geneigt ist und eine gerade oder leicht konvex gekrümmte Kontur mit einem Krümmungsradius f mit 30mm ≤ f aufweist und eine Länge e mit 0mm < e ≤ 20mm, bevorzugt 5mm ≤ e ≤ 20mm, hat.

8. Greifreifen nach einem der Ansprüche 2 bis 7, **dadurch gekennzeichnet, dass** die Wandstärke des Hohlprofils in den im verbauten Zustand nach außen gerichteten Bereichen eine größere Wandstärke aufweist.

9. Greifreifen nach einem der Ansprüche 2 bis 8, **dadurch gekennzeichnet, dass** die Profilinnenseite Verstärkungsrippen (7) in Umfangsrichtung aufweist.

10. Greifreifen nach Anspruch 9, **dadurch gekennzeichnet, dass** die Verstärkungsrippen (7) nur bereichsweise, insbesondere dem in Einbaurichtung nach außen gerichteten Bereich angeformt sind.

11. Greifreifen nach einem der vorangehenden Ansprüche, **dadurch gekennzeichnet, dass** das Material faserverstärkter Kunststoff oder Aluminium ist.

12. Greifreifen nach einem der vorangehenden Ansprüche, **dadurch gekennzeichnet, dass** der Greifreifen ein Muldensegment (12) mit einer konkaven Kontur aufweist, das entweder sowohl auf der abgeflachten Seite der axialen Teilungslinie als auch auf der bauchigen Seite der radialen Teilungslinie oder sowohl auf der bauchigen Seite der axialen Teilungslinie als auch auf der bauchigen Seite der radialen Teilungslinie des Greifreifens ausgebildet ist und einen Krümmungsradius m von 30 mm ≤ m ≤ 80 mm hat.

13. Greifreifen nach einem der vorangehenden Ansprüche, **dadurch gekennzeichnet, dass** der Greifreifen beidseitig, also mit der bauchigen Seite oder der abgeflachten Seite zum Rollstuhlrad gerichtet auf diesem montierbar ist.

## Claims

1. Hand rim for a wheelchair having an asymmetrical profile cross section that is divided in the radial and axial direction, one of the sides of the axial division and the side of the radial division facing the axis of the hand rim being bulbous and the other side of the axial division and the side of the radial division facing away from the axis of the hand rim being flattened, bulbous and flattened regions transitioning smoothly into one another,
**characterised in that** the side of the radial division facing the axis of the hand rim is an elliptical segment (8) and the side of the radial division facing away from the axis of the hand rim has a straight section (9), the straight section (9) and the elliptical segment (8) being connected via a first connecting circular segment (10) having a radius h and a second connecting circular segment (11) having a radius i, the circumference of the cross-sectional profile being formed by the elliptical segment (8), the adjoining first connecting circular segment (10), the adjoining straight section (9) and the second connecting circular segment (11).

2. Hand rim according to claim 1, **characterised in that** the hand rim is formed from a hollow profile.

3. Hand rim according to claim 1 or 2, **characterised in that** the radius h has a value of 2 mm ≤ h ≤ 15 mm and the radius i has a value of 10 mm ≤ i ≤ 20 mm.

4. Hand rim according to any of the claims 1 to 3, **characterised in that** the elliptical segment (8) is a segment of an ellipse having main axes a and b, wherein the longer main axis a encloses an angle d with the radius of the hand rim and the shorter main axis b encloses an angle d with the axial direction of the hand rim, where -25° ≤ d ≤ +25°.

5. Hand rim according to claim 4, **characterised in that** the main axis a has a length of 20 mm ≤ a ≤ 100 mm and the main axis b has a length of 15 mm ≤ b ≤ 50 mm.

6. Hand rim according to claim 5, **characterised in that** the smallest diameter c of the elliptical segment (8) has a value of 5 mm ≤ c ≤ 25 mm.

7. Hand rim according to any of the claims 1 to 6, **characterised in that** the straight section (9) is inclined by an angle g where -15° ≤ g ≤ +15° with respect to the radial division and is a straight or slightly convexly curved contour having a radius of curvature f where 30 mm ≤ f, and has a length e where 0 mm ≤ e ≤ 20 mm, preferably 5 mm ≤ e ≤ 20 mm.

8. Hand rim according to any of the claims 2 to 7, **characterised in that** the wall thickness of the hollow profile is greater in the regions oriented outwards when installed.

9. Hand rim according to any of the claims 2 to 8, **characterised in that** the inside of the profile has reinforcing ribs (7) in circumferential direction.

10. Hand rim according to claim 9, **characterised in that** the reinforcing ribs (7) are integrally formed only sectionally, in particular in the region oriented outwards in the installation direction.

11. Hand rim according to any of the preceding claims, **characterised in that** the material is fibre-reinforced plastics or aluminium.

12. Hand rim according to any of the preceding claims, **characterised in that** the hand rim comprises a recessed segment (12) having a concave contour, which segment is formed either both on the flattened side of the axial division line and on the bulbous side of the radial division line or both on the bulbous side of the axial division line and on the bulbous side of the radial division line of the hand rim and has a radius of curvature m of 30 mm ≤ m ≤ 80 mm.

13. Hand rim according to any of the preceding claims, **characterised in that** the hand rim can be mounted on the wheelchair wheel on either side, that is to say the bulbous side or the flattened side being oriented towards said wheelchair wheel.

## Revendications

1. Main courante pour un fauteuil roulant avec une section transversale de profilé asymétrique et subdivisée dans la direction radiale et la direction axiale, dans laquelle un des côtés de la subdivision axiale et le côté de la subdivision radiale tourné vers l'axe de la main courante sont réalisés de manière bombée et l'autre côté de la subdivision axiale ainsi que le côté de la subdivision radiale opposé à l'axe de la main courante sont aplatis, dans laquelle des zones bombées et aplaties se rejoignent mutuellement en douceur,
**caractérisée en ce que** le côté de la subdivision radiale tourné vers l'axe de la main courante est un segment d'ellipse (8) et le côté de la subdivision radiale opposé à l'axe de la main courante présente une pièce droite (9), dans laquelle la pièce droite (9) et le segment d'ellipse (8) sont reliés par le biais d'un premier segment circulaire de liaison (10) ayant un rayon h et d'un deuxième segment circulaire de liaison (11) ayant un rayon i, dans laquelle la circonférence du profilé de section transversale est formée par le segment d'ellipse (8), le premier segment circulaire de liaison (10) se raccordant à celui-ci, la pièce droite (9) se raccordant à celui-ci et le deuxième segment circulaire de liaison (11).

2. Main courante selon la revendication 1, **caractérisée en ce que** la main courante est réalisée à partir d'un profilé creux.

3. Main courante selon la revendication 1 ou 2, **caractérisée en ce que** le rayon h a une valeur de 2 mm ≤ h ≤ 15 mm et le rayon i a une valeur de 10 mm ≤ i ≤ 20 mm.

4. Main courante selon l'une des revendications 1 à 3, **caractérisée en ce que** le segment d'ellipse (8) est un segment d'une ellipse avec les axes principaux a et b, dans laquelle l'axe principal a le plus long forme un angle d avec le rayon de la main courante et l'axe principal b le plus court forme un angle d avec la direction d'axe de la main courante, dans laquelle -25° ≤ d ≤ +25°.

5. Main courante selon la revendication 4, **caractérisée en ce que** l'axe principal a a une longueur de 20 mm ≤ a ≤ 100 mm et l'axe principal b a une longueur de 15 mm ≤ b ≤ 50 mm.

6. Main courante selon la revendication 5, **caractérisée en ce que** le plus petit diamètre c du segment d'ellipse (8) prend une valeur de 5 mm ≤ c ≤ 25 mm.

7. Main courante selon l'une des revendications 1 à 6, **caractérisée en ce que** la pièce droite (9) est inclinée selon un angle g de -15° ≤ g ≤ +15° par rapport à la subdivision radiale et est un contour droit ou à courbure convexe légère ayant un rayon de courbure f de 30 mm ≤ f et a une longueur e de 0 mm < e ≤ 20 mm, de préférence 5 mm ≤ e ≤ 20 mm.

8. Main courante selon l'une des revendications 2 à 7, **caractérisée en ce que** l'épaisseur de paroi du profilé creux présente une épaisseur de paroi plus grosse dans les zones dirigées vers l'extérieur à l'état monté.

9. Main courante selon l'une des revendications 2 à 8, **caractérisée en ce que** le côté interne du profilé présente des nervures de renforcement (7) dans la direction de la circonférence.

10. Main courante selon la revendication 9, **caractérisée en ce que** les nervures de renforcement (7) sont formées intégralement uniquement par endroits, en particulier dans la zone dirigée vers l'extérieur dans la direction de montage.

11. Main courante selon l'une des revendications précédentes, **caractérisée en ce que** le matériau est une matière synthétique renforcée par des fibres ou l'aluminium.

12. Main courante selon l'une des revendications précédentes, **caractérisée en ce que** la main courante présente un segment creux (12) avec un contour concave qui est réalisé soit tant sur le côté aplati de la ligne de subdivision axiale que sur le côté bombé de la ligne de subdivision radiale soit tant sur le côté bombé de la ligne de subdivision axiale que sur le côté bombé de la ligne de subdivision radiale de la main courante et a un rayon de courbure m de 30 mm < m ≤ 80 mm.

13. Main courante selon l'une des revendications précédentes, **caractérisée en ce que** la main courante peut être montée des deux côtés sur la roue du fauteuil roulant, c'est-à-dire avec le côté bombé ou le côté aplati dirigé vers celle-ci.
